# EUROPEAN PATENT APPLICATION

(11) **EP 2 672 458 A2**
(43) Date of publication of application: **11.12.2013**
(21) Application number: 13170694.7
(22) Date of filing: 05.06.2013
(51) Int. Cl.: G06T 19/00

(54) **Terminal, apparatus and method for providing an augmented reality service**

(30) Priority: 06.06.2012 US 201261656113 P; 15.04.2013 KR 20130041011
(71) Applicant: Samsung Electronics Co., Ltd, Gyeonggi-do 443-742 (KR)
(72) Inventor: Lee, Jun-Ho, 443-742 Gyeonggi-do, (KR); Baek, Sung-Hwan, 443-742 Gyeonggi-do, (KR); Lee, Gong-Wook, 443-742 Gyeonggi-do, (KR); Jeung, Ji-Hong, 443-742 Gyeonggi-do, (KR); Cho, Kyu-Sung, 443-742 Gyeonggi-do, (KR)
(74) Representative: Gover, Richard Paul

(57) **Abstract**

A terminal for providing an augmented reality service. The terminal comprises a receiver configured to receive, from a first server configured to provide an augmented reality service for a first region or a second server configured to provide an augmented reality service for a second region that is differentiated from the first region, information for the second region. The terminal further comprises a display unit configured to display an augmented reality service in a first mode in the first region and an augmented reality service in a second mode in the second region. The terminal further comprises a controller configured to control the display unit to perform an augmented reality service in the first mode or the second mode, and to control a switch from performing an augmented reality service in the first mode to performing an augmented reality service in the second mode. When entering the second region from the first region while the controller is controlling the display unit to perform an augmented reality service in the first mode, the controller is further configured to control the display unit to output the information for the second region while the controller is controlling the switch to the augmented reality service in the second mode. A corresponding method is also disclosed. An apparatus comprising the terminal, a first server and a second server is also disclosed.

## Description

### BACKGROUND OF THE INVENTION

### 1. Field of the Invention:

The present invention relates generally to augmented reality technology. More particularly, the present invention relates to a terminal, an apparatus and a method for providing an augmented reality service.

### 2. Description of the Related Art:

Augmented Reality (AR) is a form of virtual reality that combines the real world seen by a user with his/her eyes and a virtual world with additional information to show them within a single image. Augmented reality, which is a concept of complementing the real world with a virtual world, uses a virtual environment made with computer graphics, but the leading part of the augmented reality is the real environment. The computer graphics serve to provide additional necessary information for or relating to the real environment. Such an augmented reality technology causes the real environment and a virtual picture to be displayed as a single image, for example, by overlapping a three dimensional virtual image on the real image seen by a user, so that additional information for the real environment may be obtained.

Recently, augmented reality services have been provided which provide a user with various information items for a real object using augmented reality technology. More particularly, an augmented reality service is provided in such a manner that, when a mobile terminal provides Global Positioning System (GPS) information and/or geomagnetic information to a server, the server determines the location and/or direction of the mobile terminal based on the provided information, and provides guide information for an object photographed by a camera in the terminal (i.e., augmented reality information).

For example, augmented reality technology is used to determine a location of a corresponding terminal using a portable phone, a Personal Digital Assistant (PDA), a personal computer, a smart phone, or the like, based on location based technology, and to provide an information service, such as a route guide, a Point Of Interest (POI) information service, a shopping information service, or an advertisement that is related to the determined location.

Either an outdoor type augmented reality service or an indoor type augmented reality service is used for such an augmented reality service based on a location-based service, in which the outdoor type augmented reality service uses a base station signal and a GPS satellite signal to determine the location of the terminal and the indoor type augmented reality service uses a method of determining an indoor location using a local area communication module or an Access Point (AP) of a Wireless Local Area Network (WLAN) installed within a building. For example, the outdoor type augmented reality service provides the service by determining a user's location using an outdoor signal, such as a GPS signal, and the indoor type augmented reality service provides the service by acquiring an indoor signal, such as a Wireless Fidelity (Wi-Fi) signal.

However, the above-described augmented reality services of the related art have problems in that the outdoor service and the indoor service are separately provided and are not provided seamlessly, which causes inconvenience to the user.

For example, when a user enters an indoor region while the user is being provided with an augmented reality service in the outdoor region using a GPS signal in the outdoor type augmented reality service, it becomes difficult to receive the GPS signal. Accordingly, the user should switch to the indoor type service so as to receive an augmented reality service using a Wi-Fi signal. However, there is a problem in that since the outdoor type augmented reality service and the indoor type augmented reality service are individually provided, the user should terminate the outdoor service and request the indoor service when entering the indoor region from the outdoor region through a manual operation which is complicated and inconvenient. In addition, when the user receives the indoor service while receiving the outdoor service, the user may feel that the augmented reality service is interrupted for a moment. Accordingly, there is a problem in that it is difficult to provide an unaffected service.

Therefore, a need exists for an apparatus and a method for providing an augmented reality service which are capable of providing an outdoor type augmented reality service and an indoor augmented reality service while being able to seamlessly switch between the two.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of embodiments of the present invention to address at least one of the above-mentioned problems and/or disadvantages and to provide at least one of the advantages described below. Accordingly, it is an aim of certain embodiments of the present invention to provide an apparatus and a method for providing an augmented reality service which are capable of providing an outdoor type augmented reality service and an indoor augmented reality service while being able to seamlessly switch between the two.

Another aim of certain embodiments of the present invention is to provide an apparatus and a method for providing an augmented reality service which automatically switch between an outdoor type augmented reality service and an indoor type augmented reality service without the user's manual operation when a user enters an indoor region from an outdoor region or enters an outdoor region from an indoor region.

Still another aim of certain embodiments of the present invention is to provide an apparatus and a method for providing an augmented reality service which provide outdoor or indoor information to be switched during the time for switching between an outdoor type augmented reality service and an indoor type augmented reality service.

According to a first aspect of the present invention, there is provided a terminal for providing an augmented reality service, the terminal comprising: a receiver configured to receive, from a first server configured to provide an augmented reality service for a first region or a second server configured to provide an augmented reality service for a second region that is differentiated from the first region, information for the second region; a display unit configured to display an augmented reality service in a first mode in the first region and an augmented reality service in a second mode in the second region; and a controller configured to control the display unit to perform an augmented reality service in the first mode or the second mode, and to control a switch from performing an augmented reality service in the first mode to performing an augmented reality service in the second mode; wherein when entering the second region from the first region while the controller is controlling the display unit to perform an augmented reality service in the first mode, the controller is further configured to control the display unit to output the information for the second region while the controller is controlling the switch to the augmented reality service in the second mode.

According to a second aspect of the present invention, there is provided a method of providing an augmented reality service in a terminal, the method comprising: performing an augmented reality service in a first mode in a first region; receiving from one of a first server configured to provide an augmented reality service for the first region and or a second server configured to provide an augmented reality service for a second region that is differentiated from the first region, information for the second region; determining whether entry from the first region into the second region is made; and when it is determined that the entry from the first region into the second region is made, outputting the information for the second region and switching from performing an augmented reality service in the first mode to performing an augmented reality service in a second mode in the second region.

According to one exemplary embodiment of the present invention, an apparatus for providing an augmented reality service is provided. The apparatus includes a first server configured to provide an augmented reality service for a first region, a second server configured to provide an augmented reality service for a second region that is differentiated from the first region, and a terminal configured to receive information for the second region from any one of the first server and the second server, and at the time of entering the second region from the first region in the course of performing the augmented reality service mode for the first region, configured to output the information for the second region and configured to switch to the augmented reality service performing mode for the second region.

According to another exemplary embodiment of the present invention, a terminal for providing an augmented reality service is provided. The terminal includes a receiver configured to receive, from one of a first server configured to provide an augmented reality service for a first region and a second server configured to provide an augmented reality service for a second region that is differentiated from the first region, information for the second region, a display unit configured to output the information for the second region at the time of entering from the second region into the first region while the augmented reality service mode for the first region is being performed, and a controller configured to switch from the augmented reality service providing mode for the first region to the augmented reality service performing mode for the second region.

According to another exemplary embodiment of the present invention, a method of providing an augmented reality service is provided. The method includes performing an augmented reality service for a first region in the first region, receiving information for a second region in the course of performing the augmented reality service mode for the first region, determining whether entry from the first region into the second region is made, and when it is determined that the entry from the first region into the second region is made, outputting the information for the second region and switching from an augmented reality service providing mode for the first region to the augmented reality service performing mode for the second region.

According to another exemplary embodiment of the present invention, an apparatus for providing an augmented reality service is provided. The apparatus includes a first server configured to provide an augmented reality service for a first region, a second server configured to provide an augmented reality service for a second region that is differentiated from the first region, and a terminal configured to perform an augmented reality service in a first mode in the first region and in a second mode in the second region, and to receive information for the second region from the first server or the second server, wherein when entering the second region from the first region while performing an augmented reality service in the first mode, the terminal is further configured to output the information for the second region and to switch to performing an augmented reality service in the second mode.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a service switch between an outdoor type augmented reality service and an indoor augmented reality service according to an exemplary embodiment of the present invention;

FIG. 2 illustrates an augmented reality service providing apparatus according to an exemplary embodiment of the present invention;

FIG. 3 is a flowchart illustrating a method of providing an augmented reality service when a service switch is made from an outdoor type to an indoor type according to a first exemplary embodiment of the present invention;

FIG. 4 is a flowchart illustrating a method of providing an augmented reality service when a service switch is made from an outdoor type to an indoor type according to a second exemplary embodiment of the present invention;

FIGS. 5A and 5B are views illustrating indoor information according to exemplary embodiments of the present invention; and

FIG. 6 is a flowchart illustrating a method of providing an augmented reality service when a service switch is made from an indoor type to an outdoor type according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Exemplary embodiments of the present invention disclose an apparatus and a method for providing an augmented reality service which provide an outdoor type augmented reality service and an indoor type augmented reality service. When a user enters an outdoor region, which is a first region, from an indoor region, which is a second region, that is differentiated from the first region or when the user enters the indoor region from the outdoor region, exemplary embodiments of the present invention automatically perform a service switch between the outdoor type augmented reality service and the indoor type augmented reality service. Exemplary embodiments of the present invention provide indoor information or outdoor information to be switched at the time of service switching.

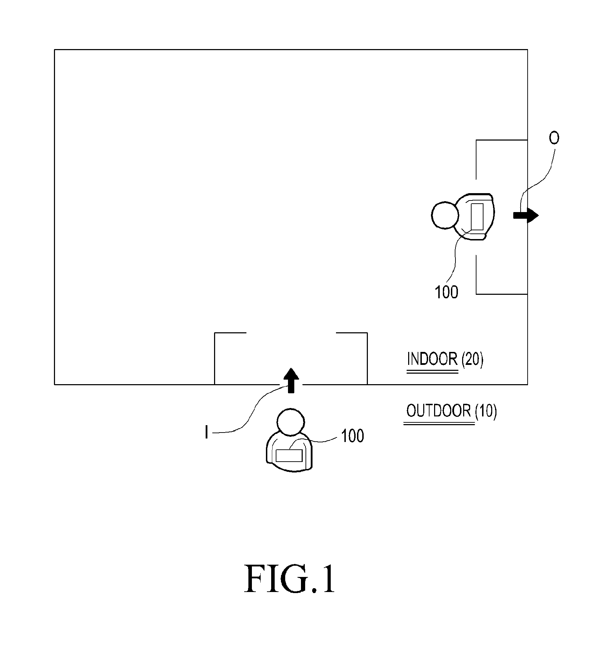

FIG. 1 illustrates a service switch between an outdoor type augmented reality service and an indoor augmented reality service according to an exemplary embodiment of the present invention.

Referring to FIG. 1, an outdoor type augmented reality service determines a location of a user's terminal 100 in an outdoor region 10, which is outside of a building or the like, using a Global Positioning System (GPS) signal and provides information services that provide information related to the determined location, such as a route guide, Point Of Interest (POI) information, shopping information, and an advertisement. For example, the outdoor type augmented reality service may be a service in which outdoor virtual image information corresponding to various information items related to the location of the terminal 100 may be displayed to be overlaid on an outdoor real environment image (i.e., a preview image) photographed by the user's terminal 100. In addition, the outdoor type augmented reality service may also display a street view provided in advance in relation to the outdoor real environment image (i.e., a preview image) photographed by the user's terminal 100 and the location of the terminal 100 as an outdoor virtual image information without the preview image.

The indoor type augmented reality service determines the location of the user's terminal 100 in an indoor region 20 within a building or the like using a Wireless Fidelity (Wi-Fi) signal using a local area communication module or an Access Point (AP) of a Wireless Local Area Network (WLAN) installed in the indoor region 20, and provides indoor virtual image information corresponding to the determined location. For example, the indoor type augmented reality service may be a service in which indoor virtual image information corresponding to indoor information items related to the location of the terminal 100 may be displayed to be overlaid on an indoor real environment image (i.e., a preview image) photographed by the user's terminal 100. In addition, the indoor type augmented reality service may display an indoor view provided in advance in relation to the indoor real environment image (i.e., a preview image) photographed by the terminal 100 and the location of the terminal 100 as indoor virtual image information without the preview image.

When the user enters the indoor region 20 in the course of receiving the outdoor type augmented reality service in the outdoor region 10 through the terminal 100 (I), the augmented reality service providing apparatus automatically switches the outdoor type augmented reality service to the indoor type augmented reality service and provides indoor information for the indoor region being entered at the time of service switching. At this time, the indoor information may include indoor entry location information, indoor brief information, and indoor interaction information for the indoor region being entered. The indoor brief information may be brief information that indicates entrance information, such as for a door of a building corresponding to the indoor region or the plan view information of the building. The indoor interaction information is information that may indicate indoor entry when the user enters the indoor region, for example, an animation configured by a 3 Dimensional (3D) object. For example, the indoor interaction information may be an animation representing opening a door, an animation representing entering an entrance of the indoor region or the like.

In addition, when the user enters the outdoor region 10 in the course of receiving the indoor type augmented reality service in the indoor region 20 through the terminal 100 (O), the augmented reality service providing apparatus automatically switches the indoor type augmented reality service to the outdoor type augmented reality service, and provides the outdoor information for the outdoor region being entered at the time of service switching. The outdoor information may be view information for a view or the like seen when the user enters the outdoor region. For example, the view information may be front side view information when entering, left side view information after entering, and/or right side view information after entering.

Now, descriptions will be made as to a configuration of an augmented reality service providing apparatus that automatically performs service switch between the outdoor type and the indoor type augmented reality service according to the user's entry switch between an outdoor region and an indoor region, and provides indoor information or outdoor information to be switched at the time of service switching.

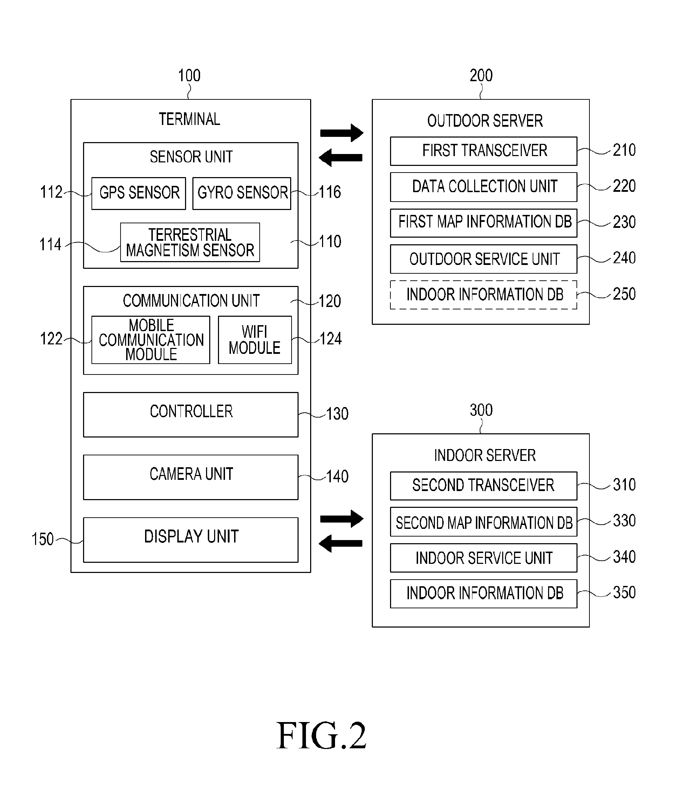

FIG. 2 illustrates an augmented reality service providing apparatus according to an exemplary embodiment of the present invention.

Referring to FIG. 2, the augmented reality service providing apparatus includes a terminal 100, an outdoor server 200, and an indoor server 300.

First, referring to the terminal 100, the terminal 100 is provided with an outdoor augmented reality service from the outdoor server 200 to output the outdoor augmented reality service, and provided with an indoor augmented reality service from the indoor server 300 to output the indoor augmented reality service. The terminal 100 may include a sensor unit 110, a communication unit 120, a controller 130, a camera unit 140, and a display unit 150.

The sensor unit 100 includes a GPS sensor 112, a terrestrial magnetism sensor 114, and a gyro sensor 116. The GPS sensor 112 receives a GPS signal. The terrestrial magnetism sensor 114 detects a terrestrial magnetism signal. The gyro sensor 116 measures a gyro value.

The communication unit 120 includes a mobile communication module 122 and a Wi-Fi module 124. The mobile communication module 122 performs a communication with the outdoor server 200 and the indoor server 300. The Wi-Fi module 124 measures a Wi-Fi signal and performs a Wi-Fi communication.

The controller 130 performs the entire control operation of the terminal 100, and performs a control operation required for performing the outdoor augmented reality service and the indoor augmented reality service. In addition, the controller 130 performs mode switch between an outdoor mode to perform the outdoor augmented reality service and an indoor mode to perform the indoor augmented reality service.

The camera unit 140 photographs a real environment that the user wishes to photograph and provides a photographed image.

The display unit 150 may be a Liquid Crystal Display (LCD), a touch screen, or the like. In the outdoor 10 mode, the display unit 150 displays an augmented reality outdoor view, and in an indoor 20 mode, displays an augmented reality indoor view. At this time, the augmented reality outdoor view may be a view displayed in which outdoor virtual image information is overlaid on an outdoor real environment image (i.e., a preview image) photographed by the camera unit 140, or a view displayed in which outdoor virtual image information corresponding to a predefined view, such as a street view without a photographed outdoor real environment image (i.e., a preview image). The terminal 100 configured as described above photographs, in the outdoor 10 mode, an outdoor real environment where the user wishes to receive an augmented reality service through the camera unit 140, and measures a GPS signal, a terrestrial magnetism intensity, and a gyro value using the GPS sensor 112, the terrestrial magnetism sensor 114, and the gyro sensor 116, respectively, of the sensor unit 110. Thereafter, the terminal 100 transmits the photographed outdoor real environment image and the measured detecting information to the outdoor server 200. The terminal 100 then receives outdoor virtual image information corresponding to the photographed outdoor real environment image and the measured detecting information from the outdoor server 200 to display an augmented reality outdoor view, in which the outdoor real environment image and the outdoor virtual image are overlapped with each other, on the display unit 150. At this time, the terminal 100 may display only the outdoor virtual image, such as a street view provided in advance without the outdoor real environment image.

In addition, in the indoor 10 mode, the terminal 100 photographs an indoor real environment where the user wishes to receive an augmented reality service through the camera unit 140, and measures the intensities of a plurality of Wi-Fi signals existing within the indoor region 20 through the Wi-Fi module 124. Thereafter, the terminal 100 transmits the photographed indoor real environment image and the measured Wi-Fi signal intensity values to the indoor server 300 through the mobile communication module 122. The terminal 100 then receives indoor virtual image information corresponding to the indoor real environment image and the measured Wi-Fi signal intensity values from the indoor server 100 and displays an augmented reality indoor view in which the indoor real environment image and the indoor virtual image are overlapped with each other on the display unit 150. At this time, the terminal 100 may display only the indoor virtual image using an indoor view provided in advance without the indoor real environment image.

In the present exemplary embodiment, the location of the terminal 100 in the indoor region is based on the plurality of Wi-Fi signal intensities measured using the Wi-Fi module 124. However, the calculation of the location of the terminal 100 in the indoor region may be enabled using other local area wireless communication means or other indoor location measuring means other than the Wi-Fi module 124.

In addition, in the outdoor 10 mode, the terminal 100 determines whether entry into the indoor region 20 is made in the state where augmented reality outdoor view is displayed. At this time, when, for a predefined length of time, the directions and objects photographed by the camera unit 140 are identical and the size of an object while being photographed increases over a predefined size, the terminal 100 determines that entry into the indoor region 20 is made. This is because it means that the user who is photographing using the terminal 100 is approaching the entry point. Therefore, according to another exemplary embodiment, when the GPS signal intensity for the outdoor service is reduced below a predefined value and the Wi-Fi signal intensity for the indoor service increases over a predefined value, the terminal 100 determines that entry into the indoor region 20 is made. This is because it means that the user having the terminal 100 arrives at a location adjacent to the indoor region 20. In a case where indoor entry point information is included in outdoor virtual image information, the terminal 100 may determine that entry into the indoor region 20 is made when the indoor entry point and the location information of the terminal 100 coincide with each other.

When it is determined that entry into the indoor region 20 is made, the terminal 100 requests the indoor augmented reality service from the indoor server 300, and when an indoor service response signal is received from the indoor server 300, the terminal 100 receives indoor information from the indoor server 300. Thereafter, the terminal 100 displays the indoor information on the display unit 150 and at the same time, perform switch to the indoor 20 mode to perform a connection with a Wi-Fi module in the indoor region 20 and to perform an indoor augmented reality service.

In addition, the terminal 100 determines, in the indoor 20 mode, whether entry into the outdoor region 10 is made in the course of displaying the augmented reality indoor view. At this time, when, for a predefined length of time, the directions and objects photographed by the camera unit 140 are identical and the size of an object while being photographed increases over a predefined size, the terminal 100 determines that the entry into the outdoor region 10 is made. This is because it means that the user who is photographing using the terminal 100 is approaching the outdoor entry door. According to another exemplary embodiment, when the Wi-Fi signal for the indoor service is reduced below a predefined value and the GPS signal for the outdoor service increases over a predefined value the terminal 100 determines that entry into the outdoor region 10 is made. This is because it means that the user having the terminal 100 arrives at a location adjacent to the outdoor region 10. According to still another exemplary embodiment, in a case where outdoor entry point information is included in indoor virtual image information, when the outdoor entry point and the location information coincide with each other, the terminal 100 may determine that entry into the outdoor region 10 is made.

When it is determined that entry into the outdoor region 10 is made, the terminal 100 displays the outdoor information provided from the indoor server 300 and requests the outdoor augmented reality service from the outdoor server 200, and when an outdoor service response signal is received from the outdoor server 200, the terminal 100 switches to the outdoor 10 mode to perform an outdoor augmented reality service.

The outdoor server 200 provides an outdoor augmented reality service. The outdoor server 200 includes a first transceiver 210, a data collection unit 220, a first map information Digital Broadcast (DB) 230, and an outdoor service unit 240. The outdoor server 200 may also include an indoor information DB 250.

The first transceiver 210 performs data transmission/reception with the terminal 100. The data collection unit 220 collects photographed outdoor real environment images and detecting information measured by the GPS sensor 112, the terrestrial magnetism sensor 114, and the gyro sensor 116 of the sensor unit 110 from the terminal 100.

The first map information DB 230 stores virtual 3D map information of the outdoor region 10. At this time, the virtual 3D map information may include not only geographical information and road and building information but also information, such as route guidance information, POI information, shopping information, and an advertisement, and may also include previously photographed bird eye view or street view information.

When a photographed outdoor real environment image and detecting information are received from the terminal 100 through the first transceiver 210, the outdoor service unit 240 performs map matching using the first virtual 3D map information of the first map information DB 230, and produces outdoor virtual image information corresponding to a real environment image using the matched map information. For example, the outdoor virtual image information may include various information items, such as a building name to be overlaid on a building in the outdoor real environment image, a description to be overlaid on a road in the outdoor real environment image, and a product list to be overlaid on a store in the outdoor real environment image. In addition, the outdoor virtual image information may be street view information previously provided in connection with the outdoor real environment image. At this time, the outdoor virtual image information may be images of 2D and 3D formats.

Now, the indoor server 300 will be described. The indoor server 300 includes a second transceiver 310, a second map information DB 330, an indoor service unit 340, and an indoor information DB 350.

The second transceiver 310 receives measured Wi-Fi intensity information from the terminal 100, and performs various data transmission/reception required for performing the indoor service.

The second map information DB 330 stores the second virtual 3D map information of the indoor region 20. At this time, the second virtual 3D map information may include information, such as in-building location information corresponding to the indoor region, additional information for an in-building location, in-building route guidance information, in-building POI information, shopping information, and an advertisement, and may also include previously photographed indoor view information.

When a photographed indoor real environment image and a plurality of measured Wi-Fi signal intensities are received from the terminal 100 through the second transceiver 310, the indoor service unit 340 determines the location of the terminal in the indoor region 20 using the plurality of Wi-Fi signal intensities, and produces indoor virtual image information corresponding to an indoor real environment image using the second virtual 3D map information of the second map information DB 330. For example, the indoor virtual image information may include various information items, such as an object name to be overlaid on an object in the indoor real environment image, a description to be overlaid on a hallway in the indoor real environment image, and a product list to be overlaid on products in the indoor real environment image. In addition, the indoor virtual image information may be indoor view information previously provided in connection with the indoor real environment image. At this time, the indoor virtual image information may be images of 2D and 3D formats.

The indoor information DB 350 stores indoor information including indoor entry location information, indoor brief information, and indoor interaction information. At this time, the indoor brief information may be brief information that indicates the indoor region, such as entrance information, such as a door of a building corresponding to the indoor region, and plan view information of the building. The indoor interaction information is information that may indicate indoor entry when the user enters indoor, and may be, for example, an animation including 3D objects. For example, the indoor interaction information may include an animation that represents opening a door, and an animation that represents entering an entrance.

Although descriptions have been made as to a case where the indoor server 300 is configured by a single server, the indoor server 300 may be replaced by a construction including an indoor management server (not illustrated) for managing indoor servers 300 and the respective indoor servers managed by the indoor management server.

Meanwhile, although it has been described that the indoor information DB 350 is included in the indoor server 300, according to an exemplary embodiment, the indoor information DB 350 may be included in the outdoor server 200 (as indoor information DB 250 of FIG. 2) or in a separate contents server (not illustrated).

When the indoor information DB 350 is included in the outdoor server 200, the outdoor service unit 240 may produce outdoor virtual image information in such a manner that an indoor entry enabled point, indoor brief information, and indoor interaction information are included in the outdoor virtual image information.

When the indoor information DB 350 is included in a separate contents server (not illustrated), the outdoor server 200 or the indoor server 300 may be provided with and use indoor information from the contents server.

Hereinafter, descriptions will be made as to how to perform service switch from the outdoor type to the indoor type in the augmented reality service providing apparatus as described above.

At first, descriptions will be made as to how to perform service switch from the outdoor augmented reality service to the indoor augmented reality service when the user enters the indoor region 20 from the outdoor region 10.

According to an exemplary embodiment of the present invention, when a service switch is made from the outdoor augmented reality service to the indoor augmented reality service, indoor information is provided, in which the indoor information may be provided from the outdoor server 200 or from the indoor server 300.

A first exemplary embodiment, where the indoor information is provided from the indoor server 200, will be described first, and then a second exemplary embodiment, where the indoor information is provided from the outdoor server 200, will be described.

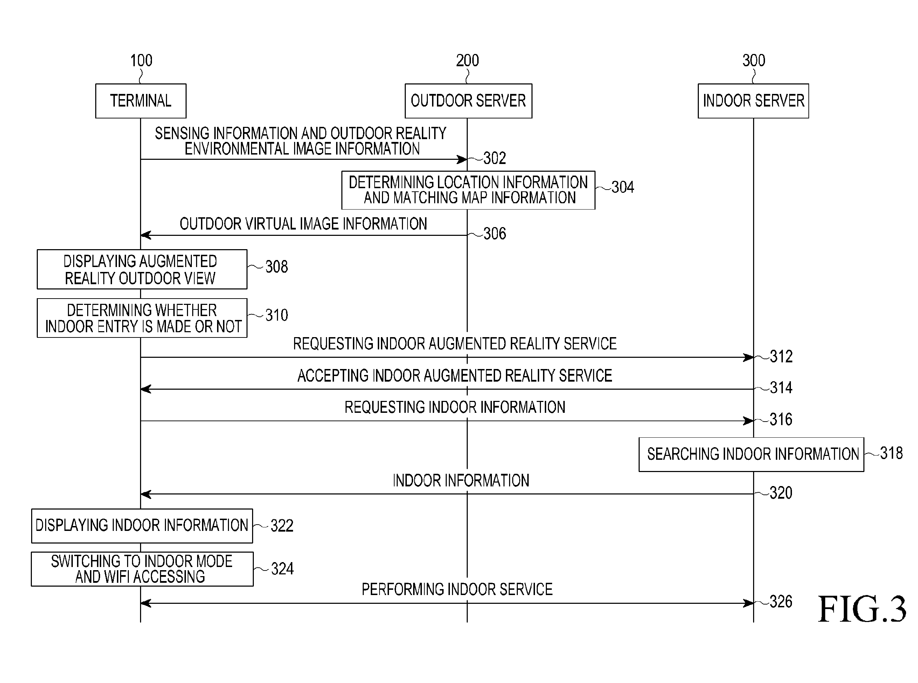

Referring now to the first case where the indoor information is provided from the indoor 300 according to the first exemplary embodiment of the present invention. FIG. 3 is a flow chart illustrating a method of providing an augmented reality service when a service switch is made from an outdoor type to an indoor type according to a first exemplary embodiment of the present invention.

Referring to FIG. 3, in the outdoor 10 mode, the terminal 100 transmits an outdoor real environment image and detecting information to the outdoor server 200 in step 302. At this time, the detecting information may include a GPS signal, geomagnetic detecting information, and gyro detecting information.

The outdoor server 200 determines the location information of the terminal 100 using the outdoor real environment image and the detecting information transmitted from the terminal 100, and performs map information matching using the first virtual 3D map information stored in advance in step 304.

The outdoor server 200 then produces outdoor virtual image information corresponding to the outdoor real environment image and the location information of the terminal 100 using the matched map information, and transmits outdoor virtual image information to the terminal 100 in step 306. At this time, the outdoor virtual image information may be various information items including a building name to be overlaid on a building in the outdoor real environment image, a description to be overlaid on a road in the outdoor real environment image, and a product list to be overlaid on a store in the outdoor real environment image. In addition, the outdoor virtual image information may be street view information provided in advance in connection with the outdoor real environment image.

When the outdoor virtual image information is received from the outdoor server 200, the terminal 100 produces an augmented reality outdoor view in which the outdoor virtual image information is overlaid on the outdoor real environment image, and displays the augmented reality outdoor view through the display unit 150 in step 308. At this time, the terminal 100 may display a street view as the augmented reality outdoor view without the outdoor real environment image.

Thereafter, the terminal 100 determines whether indoor entry is made in the state where the outdoor view is displayed in step 310. At this time, when the directions and objects photographed by the camera unit 140 are identical and the size of an object (an entrance door) in the way of being photographed increases over a predefined size, the terminal 100 determines that entry into the indoor region 20 is made. This is because it means that the user who is photographing using the terminal 100 is approaching the entrance door. According to another exemplary embodiment, when the GPS signal intensity for the outdoor service is reduced below a predefined value and the Wi-Fi signal intensity for the indoor service increases over a predefined value, the terminal 100 determines that entry into the indoor region 20 is made. This is because it means that the user having the terminal 100 arrives at a location adjacent to the indoor region 20. According to still another exemplary embodiment, in a case where indoor entry point information is included in outdoor virtual image information, the terminal 100 may determine that entry into the indoor region 20 is made when the indoor entry point and the location information of the terminal 100 coincide with each other.

When it is determined that indoor entry is made, the terminal 100 requests the indoor augmented reality service from the indoor server 300 through the communication unit 120 in step 312, and receives an indoor augmented reality service acceptance signal from the indoor server 300 in step 314. At this time, Uniform Resource Locator (URL) information or the like that is accessible for the indoor service may be included in the indoor service acceptance signal.

When the indoor augmented reality service acceptance signal is received, the terminal 100 requests indoor information for the indoor region to enter from the indoor server 300 using the URL information accessible for the indoor service in step 316.

As a result, the indoor server 300 searches for the indoor information requested by the terminal 100 in the indoor information DB 350 in step 318, and provides the indoor information to the terminal 100 in step 320. At this time, the indoor information may be indoor brief information that indicates brief information, for example, entrance information, such as a door of a building corresponding to the indoor region and plan view information of the building, and indoor interaction information that indicates, for example, an animation representing opening a door and an animation representing entering an entrance of the indoor region.

The terminal 100 receives and displays the indoor information on the display unit 150 in steps 320 and 322. At this time, the indoor information may be indoor brief information that indicates brief information, for example, entrance information, such as a door of a building corresponding to the indoor region and plan view information of the building, and indoor interaction information that indicates, for example, an animation representing opening a door and an animation representing entering an entrance of the indoor region. Until the switch to the indoor mode is made and a complete indoor augmented reality service is provided, the user may acquire the information on the indoor region 20 by seeing the indoor information, and when the switch from the outdoor mode to the indoor mode is made, the user may feel that the switch is made seamlessly.

The terminal 100 displays the indoor information and at the same time, switches to the indoor mode so as to perform the indoor service, and accesses a plurality of Wi-Fi communication modules (not illustrated) in the indoor region in step 324. Thereafter, the terminal 100 performs the indoor augmented reality service through a communication with the indoor server 300 in step 326.

Now, descriptions will be made as to the case where the indoor information is provided by the outdoor server 200 according to the second exemplary embodiment of the present invention.

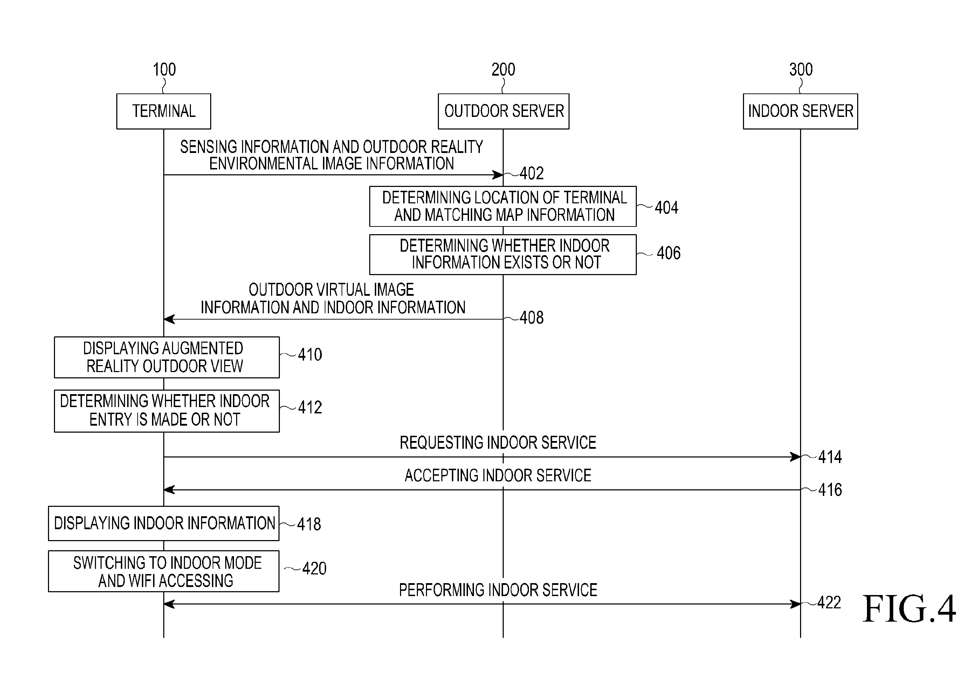

FIG. 4 is a flowchart illustrating a method of providing an augmented reality service when a service switch is made from an outdoor type to an indoor type according to a second exemplary embodiment of the present invention.

Referring to FIG. 4, the terminal 100 transmits an outdoor real environment image photographed in the outdoor 10 mode and detecting information to the outdoor server 200 in step 402. At this time, the detecting information may include a GPS signal, geomagnetic detecting information, and gyro detecting information.

The outdoor server 200 determines the location information of terminal 100 using the outdoor real environment image and the detecting information transmitted from the terminal 100, and performs map information matching using the first virtual 3D map information stored in advance in step 404.

Thereafter, the outdoor server 200 determines whether indoor information corresponding to the location where the terminal 100 is located exists using the location information of the terminal 100 and the matched map information in step 406.

When the indoor information exists, the outdoor server 200 transmits outdoor virtual image information corresponding to the outdoor real environment image and produced using the indoor information and the matched map information to the terminal 100 in step 408. At this time, the outdoor virtual image information may be various information items, such as a building name to be overlaid on a building in the outdoor real environment image, a description to be overlaid on a road in the outdoor real environment image, and a product list to be overlaid on a store in the outdoor real environment image. In addition, the outdoor virtual image information may be street view information previously provided in connection with the outdoor real environment image.

When the indoor information and the outdoor virtual image information are received from the outdoor server 200, the terminal 100 produces an augmented reality outdoor view in which the outdoor virtual image information is overlaid on the outdoor real environment image, and displays the augmented reality outdoor view through the display unit 150 in step 410. At this time, the terminal 100 may display the street view as the augmented reality outdoor view without the outdoor real environment image.

Thereafter, the terminal 100 determines whether indoor entry is made in the state where the outdoor view is displayed in step 412. At this time, when, for a predefined length of time, the directions and objects photographed by the camera unit 140 are identical and the size of an object while being photographed increases over a predefined size, the terminal 100 determines that entry into the indoor region 20 is made. This is because it means that the user who is photographing using the terminal 100 is approaching the entry point. According to another exemplary embodiment, when the GPS signal intensity for the outdoor service is reduced below a predefined value and the Wi-Fi signal intensity for the indoor service increases over a predefined value, the terminal 100 determines that entry into the indoor region 20 is made. This is because it means that the user arrives at a location adjacent to the indoor region 20. According to still another exemplary embodiment, in a case where indoor entry point information is included in outdoor virtual image information, the terminal 100 may determine that entry into the indoor region 20 is made when the indoor entry point and the location information of the terminal 100 coincide with each other.

When it is determined that entry into the indoor region 20 is made, the terminal 100 requests the indoor augmented reality service from the indoor server 300 through the communication unit 120 in step 414, and receives indoor information from the indoor server 300 in step 416. At this time, for example, URL information accessible for the indoor service may be included in the indoor service acceptance signal.

When an indoor augmented reality service acceptance signal is received, the terminal 100 displays the indoor information previously received from the outdoor server on the display unit 150 in step 418. At this time, the indoor information may be indoor brief information that indicates brief information, for example, entrance information, such as a door of a building corresponding to the indoor region and plan view information of the building, and indoor interaction information that indicates, for example, an animation representing opening a door and an animation representing entering an entrance of the indoor region.

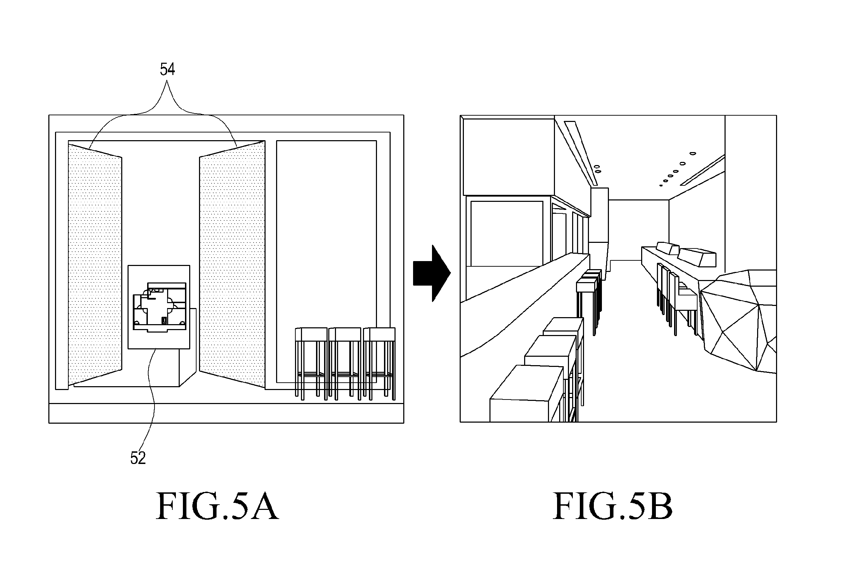

FIGS. 5A and 5B are views illustrating indoor information according to exemplary embodiments of the present description.

Referring to FIGS. 5A and 5B, the indoor brief information may include plan view information as denoted by reference numeral 52. In addition, an animation that represents opening a door for indoor entry as denoted by reference numeral 54 may be included in the indoor interaction information.

Until switch to the indoor mode is made and a complete indoor augmented reality service is provided, the user may acquire the information as to the indoor region 20 by seeing the indoor information, and, when the switch from the outdoor mode to the indoor mode is made, the user may feel that the switch is made seamlessly.

The terminal 100 displays the indoor information and at the same time, switches to the indoor mode so as to perform the indoor service, and accesses to a plurality of Wi-Fi communication modules (not illustrated) in the indoor region in step 420. Thereafter, the terminal 100 performs the indoor augmented reality service through a communication with the indoor server 300 in step 422.

In the above description, a method for service switching from the indoor augmented reality service to outdoor augmented reality service is made as the user enters the indoor region 20 from the outdoor region 10. However, to the contrary, service switch from the indoor augmented reality service to the outdoor augmented reality service switch may be made when the user enters the outdoor region 10 from the indoor region 20.

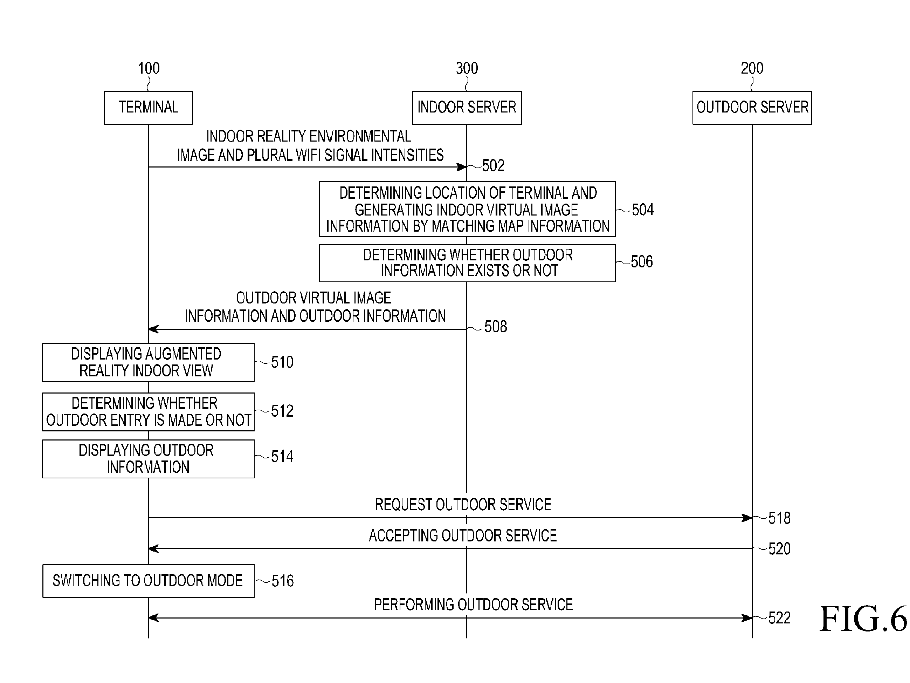

Now, the method for service switching from the indoor augmented reality service to the outdoor augmented reality service will be made with reference to FIG. 6.

FIG. 6 is a flowchart illustrating a method of providing an augmented reality service when a service switch is made from an indoor type to an outdoor type according to an exemplary embodiment of the present invention.

Referring to FIG. 6, in the indoor mode, the terminal 100 photographs an indoor real environment where the user desires to receive the augmented reality service through the camera unit 140, and measures a plurality of Wi-Fi signal intensities existing in the indoor region 20 through the Wi-Fi module 124. Thereafter, the terminal 100 transmits the photographed indoor real environment image and the plurality of measured Wi-Fi signal intensity values to the indoor server 300 in step 502.

When the photographed indoor real environment image and the plurality of measured Wi-Fi signal intensities are received from the terminal 100, the indoor server 300 determines the location of the terminal in the indoor region 20 using the plurality of Wi-Fi signal intensities, and produces indoor virtual image information to be overlaid on the indoor real environment image using the second virtual 3D map information of the second map information DB 330 in step 504. For example, the indoor virtual image information may include various information items, such as an object name to be overlaid on an object in a building in the indoor real environment image, a description to be overlaid on a hallway in the indoor real environment image, and a product list to be overlaid on products in the indoor real environment image. In addition, the indoor virtual image information may be indoor view information previously provided in connection with the location of the terminal 100 of the indoor real environment image. At this time, the indoor virtual image information may be images of 2D and 3D formats.

In addition, in the present exemplary embodiment, the location of the terminal 100 in the indoor region is determined using the plurality of Wi-Fi signal intensities measured using the Wi-Fi module 124. However, it is also possible to determine the location of the terminal 100 using a local area wireless communication means other than the Wi-Fi module 124.

Thereafter, the indoor server 300 determines whether outdoor information corresponding to the location where the terminal 100 is located exists using the location information of the terminal 100 and the matched map information in step 506.

When the outdoor information exists, the indoor server 300 transmits the outdoor virtual image information to be overlaid on the outdoor information and the outdoor real environment image to the terminal 100 in step 508.

When the outdoor information and the indoor virtual image information are received from the indoor server 200, the terminal 100 produces an augmented reality indoor view in which the indoor virtual image information is overlaid on the indoor real environment image, and displays the augmented reality indoor view through the display unit 150 in step 510.

Thereafter, the terminal 100 determines whether outdoor entry is made in the state where the indoor view is displayed in step 512. At this time, when, for a predefined length of time, the directions and objects photographed by the camera unit 140 are identical and the size of an object while being photographed increases over a predefined size, the terminal 100 determines that the entry into the outdoor region 10 is made. This is because it means that the user who is photographing using the terminal 100 is approaching the outdoor entry door. According to another exemplary embodiment, when the Wi-Fi signal for the indoor service is reduced below a predefined value and the GPS signal for the outdoor service increases over a predefined value, the terminal 100 determines that entry into the outdoor region 10 is made. This is because it means that the user having the terminal 100 arrives at a location adjacent to the outdoor region 10. According to still another exemplary embodiment, in a case where outdoor entry point information is included in indoor virtual image information, when the outdoor entry point and the location information coincide with each other, the terminal 100 may determine that entry into the outdoor region 10 is made.

When it is determined that entry into the outdoor region 10 is made, the terminal 100 displays the previously received outdoor information on the display unit 150 in step 514. At this time, the outdoor information may be outdoor brief information that indicates brief information, for example, exit information, such as a door to enter the outdoor region and plan view information of the building, and outdoor interaction information that indicates, for example, an animation representing opening a door to enter the outdoor region or the like. In addition, the outdoor information may include not only geographical information and road and building information which correspond to an outdoor entry point but also information, such as route guidance information, POI information, shopping information, and an advertisement, and may also include previously photographed bird eye view or street view information. At this time, each view information may include front side view information with reference to the entry direction, left side view information with reference to the entry direction, and right side view information with reference to the entry direction,.

Until the switch from the indoor mode to the outdoor mode is made and a complete outdoor augmented reality service is provided, the user may acquire the information as to the outdoor region 10 in advance by seeing the outdoor information, and when the switch from the indoor mode to the outdoor mode is made, the user may feel that the switch is made seamlessly.

The terminal 100 displays the outdoor information and, at the same time, switches to the outdoor mode for performing the outdoor service in step 516, and requests the outdoor service from the outdoor server 200 in step 518.

Thereafter, when the outdoor service providing is accepted from the outdoor server 200 in step 520, the terminal 100 performs the outdoor augmented reality service through communication with the outdoor server 200 in step 522.

As described above, it is convenient for the user to receive an outdoor type augmented reality service and an indoor type augmented reality service since the services may be seamlessly provided when the services are used in a switched manner. In addition, a more convenient augmented reality service may be provided since the outdoor type augmented reality service and the indoor type augmented reality service are adapted to be automatically switched to each other when the user enters an indoor region from an outdoor region or enters an outdoor region from an indoor region. Furthermore, since outdoor or indoor information to be switched is displayed during the time period required for service switching between the outdoor type augmented reality service and the indoor type augmented reality service, the user may enjoy more unaffected service switch and acquire the indoor or outdoor information when entering the indoor region from the outdoor region or the outdoor region from the indoor region.

It will be appreciated that embodiments of the present invention can be realized in the form of hardware, software or a combination of hardware and software. Any such software may be stored in the form of volatile or non-volatile storage. Certain aspects of the present invention can also be embodied as computer readable code on a computer readable recording medium. A computer readable recording medium is any data storage device that can store data which can be thereafter read by a computer system. Examples of the computer readable recording medium include Read-Only Memory (ROM), Random-Access Memory (RAM), CD-ROMs, magnetic tapes, floppy disks, and optical data storage devices. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

At this point it should be noted that the exemplary embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the exemplary embodiments of the present invention as described above. Alternatively, one or more processors operating in accordance with stored instructions may implement the functions associated with the exemplary embodiments of the present invention as described above. If such is the case, it is within the scope of the present disclosure that such instructions may be stored on one or more processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present invention can be easily construed by programmers skilled in the art to which the present invention pertains.

While exemplary embodiments of the present invention have been shown and described with reference to certain embodiments thereof, it will be understood by those skilled in the art that various changes in form and details may be made therein without departing from the scope of the present invention as defined by the appended claims.

## Claims

1. A terminal for providing an augmented reality service, the terminal comprising:
a receiver configured to receive, from a first server configured to provide an augmented reality service for a first region or a second server configured to provide an augmented reality service for a second region that is differentiated from the first region, information for the second region;
a display unit configured to display an augmented reality service in a first mode in the first region and an augmented reality service in a second mode in the second region; and
a controller configured to control the display unit to perform an augmented reality service in the first mode or the second mode, and to control a switch from performing an augmented reality service in the first mode to performing an augmented reality service in the second mode;
wherein when entering the second region from the first region while the controller is controlling the display unit to perform an augmented reality service in the first mode, the controller is further configured to control the display unit to output the information for the second region while the controller is controlling the switch to the augmented reality service in the second mode.

2. The terminal of claim 1, wherein the first region is one of an outdoor region and an indoor region and the second region is the other of an outdoor region and an indoor region.

3. The terminal of claim 1 or claim 2, wherein the information for the second region includes brief information for the second region and interaction information.

4. The terminal of claim 3, wherein when the second region is an indoor region, the brief information indicates entrance information including at least one of information of a door of a building corresponding to the indoor region and the plan

5. The terminal of claim 3 or claim 4, wherein when the second region is an indoor region, the interaction information comprises information that indicates indoor entry when a user enters the indoor region and includes at least one of an animation representing opening a door and an animation representing entering an entrance of the indoor region.

6. The terminal of claim 5, wherein the animation is configured by a 3 Dimensional, 3D, object.

7. An apparatus for providing an augmented reality service, the apparatus comprising:
a first server configured to provide an augmented reality service for a first region;
a second server configured to provide an augmented reality service for a second region that is differentiated from the first region; and
a terminal according to any one of claims 1 to 6;
wherein at least one of the first server and the second server is configured to transmit information for the second region to the terminal.

8. A method of providing an augmented reality service in a terminal, the method comprising:
performing an augmented reality service in a first mode in a first region;
receiving from one of a first server configured to provide an augmented reality service for the first region and or a second server configured to provide an augmented reality service for a second region that is differentiated from the first region, information for the second region;
determining whether entry from the first region into the second region is made; and
when it is determined that the entry from the first region into the second region is made, outputting the information for the second region and switching from performing an augmented reality service in the first mode to performing an augmented reality service in a second mode in the second region.

9. The method of claim 8, wherein the first region is one of an outdoor region and an indoor region and the second region is the other of an outdoor region and an indoor region.

10. The method of claim 8 for claim 9, wherein the information for the second region includes brief information for the second region and interaction information.

11. The method of claim 10, wherein when the second region is an indoor region, the brief information indicates entrance information including at least one of information of a door of a building corresponding to the indoor region and the plan view information of the building.

12. The method of claim 10 or claim 11, wherein when the second region is an indoor region, the interaction information comprises information that indicates indoor entry when a user enters the indoor region and includes at least one of an animation representing opening a door and an animation representing entering an entrance of the indoor region.

13. The method of claim 12, wherein the animation is configured by a 3 Dimensional, 3D, object.

14. A non-transitory computer-readable storage medium storing instructions that, when executed, cause at least one processor to perform the method of any one of claims 8 to 13.
